# EUROPÄISCHE PATENTSCHRIFT

(11) **EP 1 584 513 B1**
(45) Veröffentlichungstag und Bekanntmachung des Hinweises auf die Patenterteilung: **03.10.2007**
(21) Anmeldenummer: 05002992.5
(22) Anmeldetag: 12.02.2005
(51) Int. Cl.: B60N 2/48

(54) **Crashaktive Kopfstütze**
Crash-active headrest
Appui-tête actif lors d'un choc

(30) Priorität: 05.04.2004 DE 102004017800
(43) Veröffentlichungstag der Anmeldung: 12.10.2005
(73) Patentinhaber: KEIPER GmbH & Co. KG, 67657 Kaiserslautern (DE)
(72) Erfinder: Schilling, Jürgen, 67659 Kaiserslautern-Erlenbach (DE); Klein, Harald, 66909 Matzenbach (DE); Ruess, Georg, 66851 Oberarmbach (DE); Münster, Ralf, 67661 Kaiserslautern (DE)
(74) Vertreter: Patentanwälte Hosenthien-Held und Dr. Held

(56) Entgegenhaltungen:
- EP-A- 0 976 608
- DE-A1- 10 202 598

## Beschreibung

Die Erfindung betrifft eine Kopfstütze mit den Merkmalen des Oberbegriffs des Anspruches 1.

Aus der DE 199 51 966 A 1 ist eine Kopfstütze bekannt, bei welcher das Prallelement mittels eines als Parallelogramm ausgebildeten Viergelenks im Crashfall ausfährt, wobei als Antrieb ein federbelasteter Schwenkarm dient, welcher in der Crashstellung verriegelt. In der DE 102 02 598 A1 die dem Oberbegriff der Anspruchs 1 entspricht ist eine Kopfstütze der eingangs genannten Art beschrieben, bei welcher Komfortstellungen des Prallelementes vorgesehen sind, die durch eine Schlingfeder reibschlüssig gesichert werden.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Durch obere und untere Schwingen, welche eine von der Parallelität abweichende Ausrichtung zueinander einnehmen, also durch ein von der Parallelogrammform abweichendes Viergelenk, wird das System der Kopfstütze stabilisiert. Zunächst wird in der Ausgangsstellung ein Totpunkt im Viergelenk vermieden, welcher das Ausfahren im Crashfall erschweren könnte. Des weiteren kann der bei Kräften von vorne oder von oben auf die Schwingen relevante Hebelarm kurz gehalten werden. Schließlich kann auch ein günstigerer Auffangwinkel erreicht werden. Erreicht wird dies alles vorzugsweise durch unterschiedliche Längen der Schwingen, beispielsweise indem die unteren Schwingen länger als die oberen Schwingen sind, soweit es die Abstände der Gelenke im Viergelenk betrifft. Die langen unteren Schwingen haben noch den Vorteil, dass beim Ausfahren des Viergelenks das auf dem Prallelement vorgesehene Polsterteil sich weitgehend tangential in Fahrtrichtung nach vorne bewegt, was eine einfachere Verblendung erlaubt und Kollisionen im unteren Bereich verhindert.

Durch eine Ausbildung der Kopfstütze für wenigstens eine weitere Komfortstellung, in die sie im Normalgebrauch aus der Ausgangsstellung heraus überführbar ist, hat den Vorteil, dass die prinzipiell gegebene Beweglichkeit der Kopfstütze auch zur Komfortsteigerung eingesetzt werden kann. Dabei kann im Crashfall aus jeder Komfortstellung heraus eine Crashstellung eingenommen werden. Die Sicherung erfolgt mittels eines Ringelementes, welches mittels eines Reibschlusses an der Innenseite einer Lagerbuchse vorzugsweise mehrere, stufenlos einstellbare Komfortstellungen sichert. Dabei ist das Ringelement vorzugsweise an einer die Achse der oberen Schwingen umschließenden Welle angeformt oder sitzt fest auf ihr.

Ein reversibles Rücksetzen der Kopfstütze nach einem Crash ermöglicht einen erneuten Einsatz der Kopfstütze, was Material- und Werkstattkosten spart. Vorzugsweise kann der Insasse selber die Kopfstützen rücksetzen, was erneut Werkstattkosten spart. Hierfür ist ein Rücksetzer, beispielsweise ein in der Kopfstütze integriertes, bewegliches Zug-, Druck- oder Drehelement oder ein nach einem Crash in die Kopfstütze einführbares Werkzeug vorgesehen. Der Rücksetzer bringt beispielsweise die Crashsperre - und gegebenenfalls eine Magnetauslösung - zurück in die Ausgangsposition. Ein in die Kopfstütze integrierter Rücksetzer ist vorzugsweise erst nach dem Crash sichtbar, um eine vorzeitige Betätigung auszuschließen. Ein als Werkzeug ausgebildeter Rücksetzer ist vorzugsweise in seiner Längsrichtung in die Kopfstütze einführbar, so dass er eine im wesentlichen längliche Grundform aufweist und damit bei Nichtgebrauch leicht zu verstauen ist.

Eine Ausbildung des Energiespeichers als gespannte Feder hat den Vorteil, dass mit einer solchen Feder genügend Energie für ein rasches Ausfahren des Viergelenks gespeichert werden kann. Das Halten dieser gespannten Feder mittels einer schwenkbaren Klinke, was direkt oder indirekt durch Halten eines von der Feder beaufschlagten Elementes erfolgt, hat den Vorteil, dass die Feder einerseits im Verhältnis zur Klinke formschlüssig gehalten wird und andererseits durch eine geeignete Ausrichtung der Klinke günstige Hebelverhältnisse geschaffen werden, so dass die Haltekraft gering ausgelegt werden kann. Mittels eines schwenkbar gelagerten Fangblechs, welches von der Feder beaufschlagt und von der Klinke gehalten wird, können durch die Anordnung der Beaufschlagungsstelle der Feder und der Haltestelle der Klinke ebenfalls günstigere Hebelverhältnisse erreicht werden, so dass die Haltekraft der Klinke wiederum geringer ausgelegt werden kann. Das Fangblech beaufschlagt im Crashfall das Prallelement direkt oder indirekt über die Schwingen. Im Normalgebrauch kann es die Crashsperre aufhalten.

Die Klinke wird vorzugsweise durch ein beispielsweise an einem vorgespannten Lagerarm gelagerte, vorzugsweise in Schließrichtung hinter der Klinke eingeschnapptes Rundelement gehalten, beispielsweise eine drehbare Rolle, ein Bolzen oder ein Blech mit kreisförmiger Prägung. Im Crashfall wird das Rundelement vorzugsweise durch einen am Träger angelenkten, vorgespannter Steuerhebel bewegt, welcher in der Ausgangsstellung von einem Magneten gehalten wird. Die Seite der Klinke, an welcher das Rundelement anliegt, verläuft möglichst senkrecht zum Lagerarm des Rundelementes, damit die Klinke ein geringes öffnendes Moment auf das Rundelement ausüben kann. Hingegen ist der Steuerhebel vorzugsweise mit dem Lagerarm des Rundelementes auf Mitnahme gekoppelt, um mit möglichst geringerem Kraftaufwand das Rundelement zu bewegen.

Das Rücksetzen gestaltet sich dann besonders einfach, wenn zunächst nur der Steuerhebel von dem am Steuerhebel angreifenden Rücksetzer in die Ausgangsstellung gebracht wird, insbesondere die Crashsperre gelöst und der Steuerhebel wieder zum Magneten gebracht wird. Anschließend kann dann mit beiden Händen gegen die Kraft der Feder die Kopfstütze eingefahren werden, ohne dass weitere zeitgleiche Handgriffe notwendig sind. Während die Feder die Klinke zurückdreht, rollt oder gleitet das Rundelement vorzugsweise an der Klinke entlang, bis die Ausgangsstellung erreicht ist. Eine Entlastung des Steuerhebels kann durch das veriegelte Fangblech erfolgen.

In einer bevorzugten Ausführung ist das Fangblech wenigstens mittelbar auf der Achse für die oberen Schwingen gelagert, beispielsweise mittels der angeformten oder anderweitig angebrachten Lagerbuchse. Das Ringelement ist dabei vorzugsweise radial zwischen dem Fangblech und der Achse angeordnet, vorzugsweise innerhalb der Lagerbuchse, so dass es für die Erzeugung des Reibschlusses großflächig mit dem Fangblech zusammenwirken kann. Die oberen Schwingen brauchen nicht direkt auf der Achse gelagert zu sein, sondern werden vorzugsweise durch die als Hohlwelle ausgebildete Welle verbunden und zugleich durch sie beabstandet. Die Welle kann auch an den oberen Schwingen angeformt sein und/oder aus miteinander verbundenen Teilen bestehen.

Das Ringelement kann mit Formschluss fest auf der Welle sitzen, während zwischen seiner Außenmantelfläche und der Lagerbuchse der Reibschluss besteht. So kann das Ringelement die Relativposition zwischen der Welle, d.h. den Schwingen, einerseits und der Lagerbuchse, d.h. dem Fangblech, andererseits sichern, also die Stellung des Viergelenks relativ zum Träger und damit die Komfortstellungen. Das Ringelement kann aber auch zwischen einem anderen Getriebeglied des Viergelenks und einer Gelenkachse desselben sitzen.

Für die Erzeugung des Formschlusses zwischen Ringelement und Welle ist es von Vorteil, wenn das Ringelement mit Rippen oder anderen vorspringenden oder zurückgesetzten Materialpartien mit der mit entsprechenden, dazu passend ausgebildeten Rippen oder Materialpartien versehenen Welle drehfest verbunden ist. Zur axialen Beabstandung zwischen dem Fangblech und der oberen Schwinge ist das Ringelement mit einem Flansch versehen, mittels welchem es axial zwischen dem Fangblech und der oberen Schwinge angeordnet ist.

Das Ringelement ist für einen verbesserten Spielausgleich in bevorzugter Ausführung zweiteilig ausgebildet. Ein Federteil, welches formschlüssig auf der Welle sitzt, sorgt mittels einer radialen Vorspannung für einen Spielausgleich in radialer Richtung, während ein axial geschlitztes Reibbuchsenteil, welches reibschlüssig mit der Lagerbuchse zusammenwirkt, mittels einer Vorspannung in Umfangsrichtung einen Spielausgleich in Umfangsrichtung bewirkt. Durch einen durch Auslassung einer Rippe entstehenden Freiraum des Federteiles und eine radial leicht nach innen versetzte Lasche des Reibbuchsenteils können die beiden Teile des Ringelementes drehfest miteinander verbunden sein, während Axialanschläge für eine genaue Relativpositionierung in axialer Richtung sorgen.

Mehrere Crashstellungen, die dann durch eine Crashsperre jeweils nach hinten gesperrt sind, haben den Vorteil, dass im Crashfall das sich vorwärts bewegende Prallelement unmittelbar nach Kontakt mit dem sich nach hinten bewegenden Kopf des Insassens gesperrt werden kann. Der Kopf wird dann möglichst weit vorne aufgefangen, erhält aber keinen zusätzlichen Impuls durch eine ungebremste, ihn nach vorne werfende Kopfstütze. Dies verhindert zusätzliche Belastungen für den Insassen. Für eine einfache und kostengünstige Realisierung einer solchen Crashsperre ist in bevorzugter Ausführung am Träger ein wenigstens teilweise bewegliches Crashsperrenteil und an wenigstens einer der Schwingen oder einem zusammen mit den Schwingen bewegten Bauteil eine Crashsperrenverzahnung, welche in jeder Crashstellung mit dem Crashsperrenteil zusammenwirkt, wobei durch mehrere Zähne mehrere Crashstellungen definiert werden. Durch eine Art Sägezahnform wird die Sperrwirkung auf eine Richtung beschränkt, d.h. die Vorwärtsbewegung des Prallelementes wird nicht behindert.

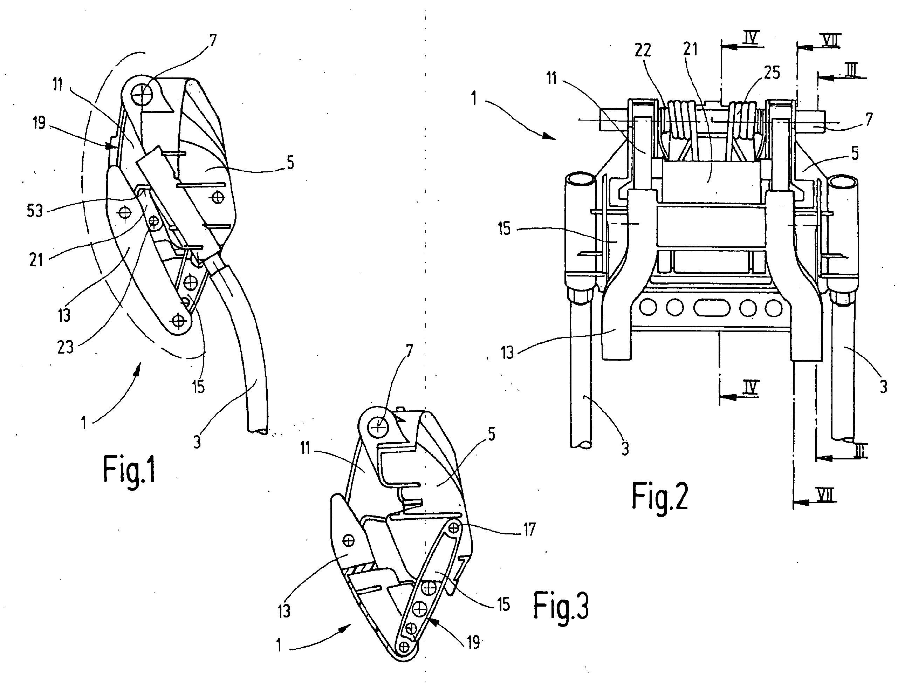

Im folgenden ist die Erfindung anhand eines in der Zeichnung dargestellten Ausführungsbeispiels näher erläutert. Es zeigen
- Fig. 1: eine Seitenansicht des Ausführungsbeispiels in der Ausgangsstellung mit angedeuteter Polsterung,
- Fig. 2: eine Vorderansicht des Ausführungsbeispiels,
- Fig. 3: einen der Linie III-III in Fig. 2 entsprechenden Schnitt durch das Ausführungsbeispiel, welches sich in einer mittleren Komfortstellung befindet,

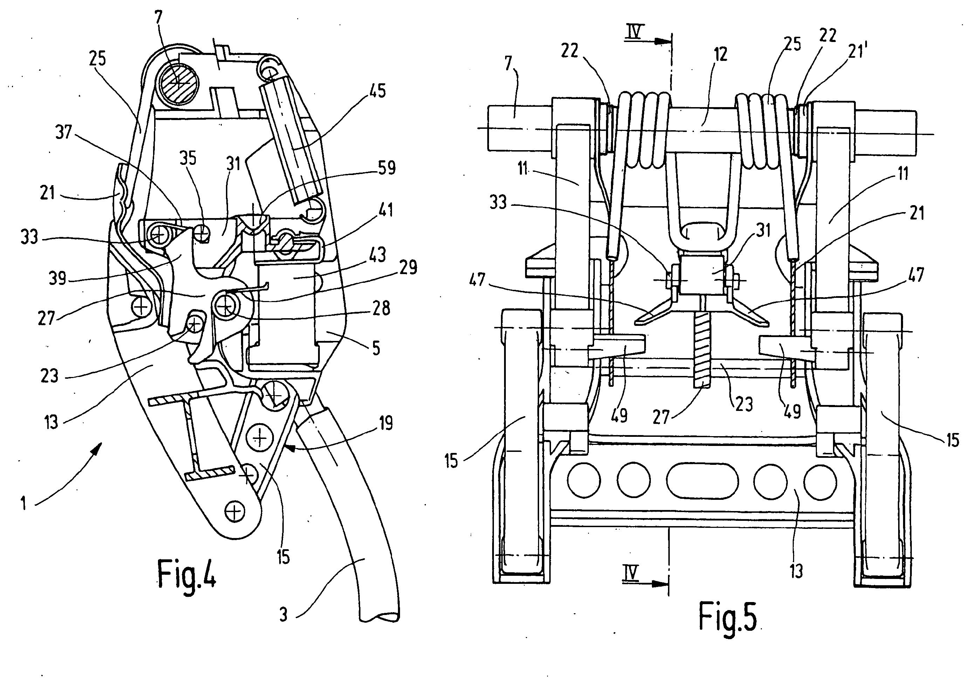

- Fig. 4: einen Schnitt durch das Ausführungsbeispiel in der Ausgangsstellung entlang der Linie IV-IV in Fig. 2,
- Fig. 5: eine teilweise geschnittene Rückansicht des Ausführungsbeispiels ohne Träger in der Ausgangsstellung,

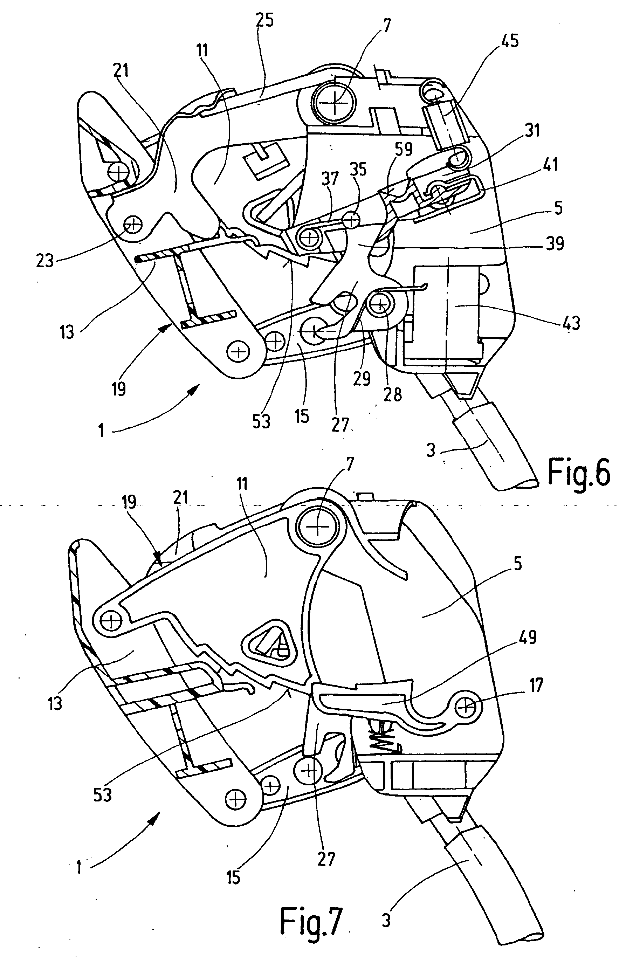

- Fig. 6: einen Schnitt entsprechend Fig. 4 in der vordersten Crashstellung,
- Fig. 7: einen der Linie VII-VII in Fig. 2 entsprechenden Schnitt durch das Ausführungsbeispiel, welcher ebenfalls die vorderste Crashstellung zeigt,

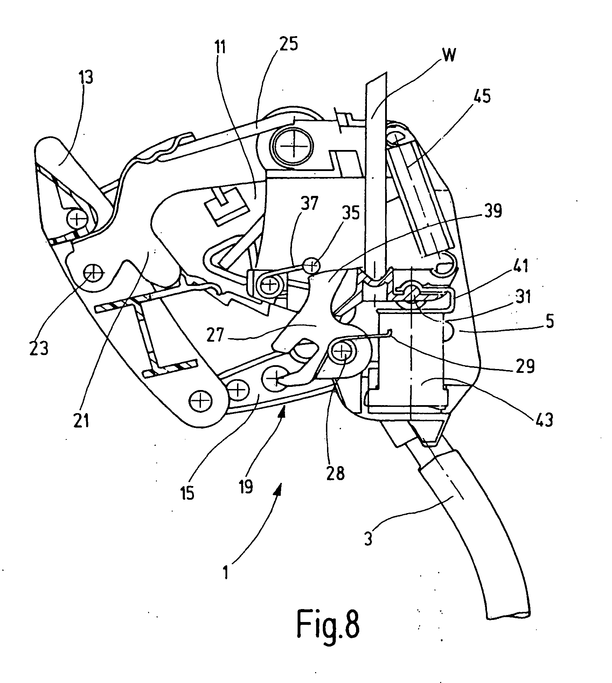

- Fig. 8: einen Schnitt entsprechend Fig. 6 beim Rücksetzen,

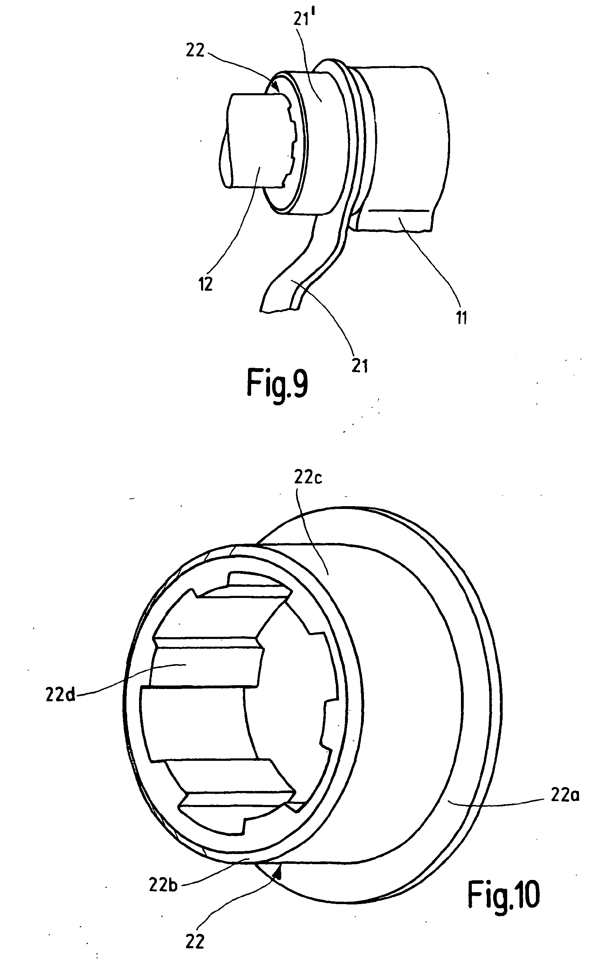

- Fig. 9: eine perspektivische Teilansicht des Ausführungsbeispiels,
- Fig. 10: eine perspektivische Ansicht eines Ringelementes,

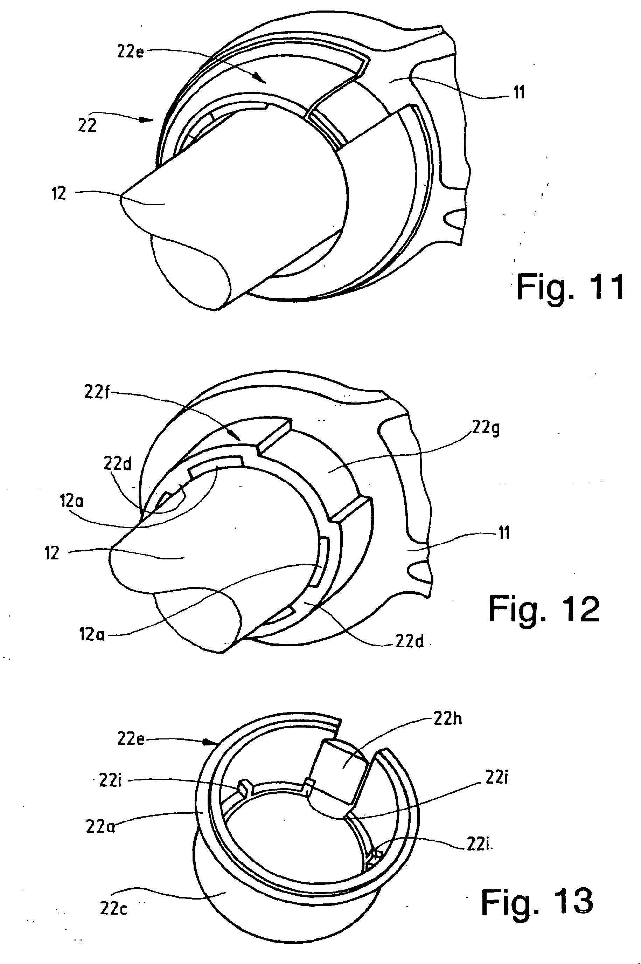

- Fig. 11: eine perspektivische Ansicht eines abgewandelten, zweiteiligen Ringelementes, welches auf einer Welle montiert ist,
- Fig. 12: eine Fig. 11 entsprechende Darstellung ohne Ringbuchsenteil, und
- Fig. 13: eine perspektivische Ansicht des Ringbuchsenteils aus einer zu Fig. 11 unterschiedlichen Blickrichtung.

Eine Kopfstütze 1 ist für einen Fahrzeugsitz eines Kraftfahrzeuges vorgesehen. Die Kopfstütze 1 ist mittels zweier paralleler Kopfstützenstangen 3, die verschieblich in der Rückenlehne des Fahrzeugsitzes gelagert sind, in ihrer Höhe einstellbar. Die Kopfstützenstangen 3 sind mit ihrem oberen Ende fest in einen quer zu den Kopfstützenstangen 3 angeordneten Träger 5 eingeführt. Am oberen Ende des Trägers 5 ist eine horizontal angeordnete, quer zu den Kopfstützenstangen 3 verlaufende Achse 7 im Träger 5 gelagert.

Auf der Achse 7 ist ein Paar oberer Schwingen 11 schwenkbar gelagert, welche von einander beabstandet angeordnet und durch eine stirnseitig jeweils an den oberen Schwingen 11 angeformte, die Achse 7 umschließende Hohlwelle, imfolgenden als Welle 12 bezeichnet, verbunden sind. Für eine einfache Herstellung ist an jeder oberen Schwinge 11 ungefähr die Hälfte der Welle 12 angeformt, wobei die beiden Hälften miteinander verclipst sind. Die beiden oberen Schwingen 11 weisen eine näherungsweise dreieckige Grundform auf, wobei die Achse 7 in einer Ecke jeder oberen Schwingen 11 angeordnet ist. Die oberen Schwingen 11 weisen parallel zueinander nach vorne und nach unten. In der vordersten Ecke jeder oberen Schwinge 11 ist letztere am oberen Ende eines gemeinsamen Prallelements 13 angelenkt, welches in Fahrtrichtung vor dem Träger 5 angeordnet ist. Das Prallelement 13 besteht im wesentlichen aus zwei seitlich abgekröpften Schenkeln, welche miteinander durch zwei parallel zur Achse 7 verlaufende Quertraversen verbunden sind. Aus fertigungstechnischen Gründen kann das als Kunststoff-Spitzgußteil gefertigte Prallelement 13 aus zwei im wesentlichen spiegelbildlichen Hälften zusammengefügt sein. Auf dem Prallelement 13 ist ein Polsterteil angeordnet, wobei das Prallelement 13 zugleich der Polsterträger sein kann, d.h. das Polster direkt am Prallelement 13 befestigt sein kann.

Eine Paar unterer Schwingen 15 von länglicher Gestalt sind einerseits jeweils mittels eines horizontalen, zur Achse 7 parallelen Schwingenlagerbolzens 17 am Träger 5 und andererseits am unteren Ende des Prallelements 13 angelenkt. Der Träger 5, die obere Schwinge 11, das Prallelement 13 und die untere Schwinge 15 bilden jeweils ein Viergelenk 19. Dabei ist die untere Schwinge 15 länger als die obere Schwinge 11, so dass die obere Schwinge 11 und die untere Schwinge 15 nicht parallel sind. Zudem schwenken die obere Schwinge 11 und die zugehörige untere Schwinge 15 nicht in der gleichen Ebene, sondern sind entsprechend der Abkröpfung des Prallelementes 13 versetzt zueinander angeordnet.

Zwischen den beiden oberen Schwingen 11 ist ein Fangblech 21 mit zwei seitlich eingebogenen Randbereichen angeordnet, wobei am oberen Ende jedes Randbereichs eine Lagerbuchse 21' angeformt ist. Das Fangblech 21 ist mittels dieser Lagerbuchsen 21' um die Achse 7 schwenkbar und unter radialer Zwischenlage je eines Ringelementes 22 auf der Welle 12 gelagert.

Jedes der beiden Ringelemente 22 besteht aus Kunststoff und weist eine zylindrische Grundform auf, an deren einen axialen Ende ein radial abstehender Flansch 22a angeformt ist, während am anderen eine Fase 22b vorgesehen ist. Das mit dem Flansch 22a versehene Ende des Ringelementes 22 ist axial zwischen der Lagerbuchse 21' und der oberen Schwinge 11 angeordnet und verhindert so einen direkten Kontakt zwischen diesen beiden Bauteilen. Mit seiner axial zwischen dem Flansch 22a und der Fase 22b angeordneten Mantelaußenfläche 22c liegt das Ringelement 22 reibschlüssig an der Innenseite der zugeordneten Lagerbuchse 21' an, gegebenenfalls unter Zwischenlage eines Films aus Schmierstoff. Auf seiner Mantelinnenfläche weist jedes Ringelement 22 sechs in axialer Richtung verlaufende Rippen 22d auf, die radial nach innen vorspringen. Statt der Rippen 22d können auch andere vorspringende oder zurückgesetzte Materialpartien vorgesehen sein. Die Rippen 22d wirken formschlüssig mit entsprechenden Wellenrippen 12a der Welle 12 zusammen, so dass das Ringelement 22 drehfest auf der Welle 12 sitzt und mit dieser relativ zur Achse 7 drehbar ist. In einer abgewandelten Ausführung ist das Ringelement 22 einstückig mit der Welle 12 ausgebildet, d.h. an dieser angeformt.

Das Fangblech 21 weist an dem von der Achse 7 abgewandten Ende einen parallel zur Achse 7 verlaufenden Haltebolzen 23 auf. Das in Fahrtrichtung hinter dem Prallelement 13 angeordnete Fangblech 21 deckt auf der vom Prallelement 13 abgewandten Seite eine Doppelschenkelfeder 25 ab, welche als Energiespeicher dient. Die Doppelschenkelfeder 25 beaufschlagt mit einem Mittelabschnitt das Fangblech 21, ist mit zwei seitlich anschließenden Wicklungsabschnitten schraubenförmig um die Achse 7 gewickelt und ist mit zwei Endabschnitten am Träger 5 abgestützt. Das Fangblech 21 wird gehalten durch eine Klinke 27, welche mit ihrem Klinkenmaul den Haltebolzen 23 aufnimmt. Die Klinke 27 ist auf einem zur Achse 7 parallelen Klinkenlagerbolzen 28 schwenkbar am Träger gelagert und mittels einer gegenüber der Doppelschenkelfeder 25 schwachen Klinkenfeder 29 gegenüber dem Träger 5 in Öffnungsrichtung vorgespannt.

Ein in Fahrtrichtung nach hinten weisender Steuerhebel 31 ist auf einem zur Achse 7 parallelen Hebellagerbolzen 33 schwenkbar am Träger 5 oberhalb der Klinke 27 gelagert. Eine Rolle ist als ein Rundelement 35 vorgesehen, dessen Drehachse parallel zum Hebellagerbolzen 33 ausgerichtet ist. Das Rundelement 35 ist drehbar auf dem abgewinkelten Endabschnitt eines als Lagerarm dienenden Schenkels einer als Schenkelfeder ausgebildeten Haltefeder 37 gelagert. Die Haltefeder 37 ist auf dem Hebellagerbolzen 33 gelagert, wobei eine seitlich vorspringende Materialpartie des Steuerhebels 31 unterhalb des das Rundelement 35 lagernden Schenkels der Haltefeder 37 angeordnet ist. Um die Klinke 27 zu sperren, ist das Rundelement 35 in Öffnungsrichtung der Klinke 27 vor dieser, genauer gesagt vor einem Sperrarm 39 derselben, bzw. in inverser Betrachtungsweise in Schließrichtung hinter der Klinke 27 angeordnet, was aufgrund der Vorspannung im folgenden als eingeschnappt bezeichnet wird.

Am freien Ende des aus Kunststoff gefertigten Steuerhebels 31 ist seitlich eine metallische, von hinten aufgeclipste Haftplatte 41 angeordnet, welche im Normalfall von einem unterhalb des Steuerhebels 31 angeordneten Magnet 43 angezogen wird und an diesem stirnseitig anliegt. Eine als Zugfeder ausgebildete Auslösefeder 45, welche einerseits am Steuerhebel 31 und andererseits am oberen Ende des Trägers 5 eingehängt ist, spannt den Steuerhebel 31 in der vom Magneten 43 abgewandten Richtung, also nach oben, vor.

Seitlich bezüglich der Verbindungslinie zwischen Hebellagerbolzen 33 und Haftplatte 41 ist vom Steuerhebel 31 links und rechts abstehend je ein Ausleger 47 angeformt. Unterhalb des freien Endes jedes Auslegers 47 ist mit einem kleinen Abstand das freie Ende eines Crashsperrenarms 49 angeordnet, welcher drehbar auf dem Schwingenlagerbolzen 17 gelagert ist. Der als Crashsperrenteil dienende Crashsperrenarm 49 ist nach oben vorgespannt, wird aber im Normalfall durch das Fangblech 21 unten gehalten.

Der Crashsperrenarm 49 weist auf seiner Oberseite zwei Stufen einer Art Sägezahnverzahnung auf. Zum später beschriebenen Zusammenwirken der oberen Schwinge 11 mit dem Crashsperrenarm 49 weist die obere Schwinge 11 auf der von der Achse 7 entfernt liegenden, um die Achse 7 gekrümmten Seite eine entsprechende Sägezahnverzahnung als Crashsperrenverzahnung 53 auf.

Im Normalfall kann eine Komforteinstellung der Kopfstütze 1 vorgenommen werden, d.h. das Prallclement 13 mit der darauf angebrachten, nicht näher dargestellten Polsterung kann vom Insassen mittels der Viergelenke 19 bewegt werden, wobei die verschiedenen, stufenlos einnehmbaren Komfortstellungen durch den Reibschluss zwischen den von den oberen Schwingen 11 mitgenommenen Ringelementen 22 und den Lagerbuchsen 21' des festgehaltenen Fangblechs 21 gesichert werden. Um die Bewegung nach vorne und nach hinten für die obere Schwinge 11 zu begrenzen, ist an der oberen Schwinge 11 ein Anschlag angeformt, welcher nach vorne in Anlage an das Fangblech 21 und nach hinten an den Träger 5 gelangt. Während der Komforteinstellung bleibt das Fangblech 21 verriegelt, d.h. die Doppelschenkelfeder 25 gespannt. Nur in der hintersten Komfortstellung liegt das Fangblech 21 an dem Prallelement 13 an.

Im Falle eines Heckcrashs erhält der Magnet 43 einen Impuls und gibt die Haftplatte 41 frei. Die Auslösefeder 45 zieht nun den Steuerhebel 31 nach oben, wobei er die Haltefeder 37 samt Rundelement 35 mitnimmt. Dadurch wird die Klinke 27 freigegeben, so dass die sich entspannende Doppelschenkelfeder 25 das Fangblech 21 nach vorne drücken und zeitgleich über den Haltebolzen 23 die Klinke 27 öffnen kann. Damit ist die crashaktive Kopfstütze 1 ausgelöst. Das Fangblech 21 gelangt in Anlage an das Prallelement 13, welches unter Ausfahren der Viergelenke 19 nach vorne schnellt. Zugleich schwenken die vom Fangblech 21 freigegebenen Crashsperrenarme 49 aufgrund ihrer Federbelastung nach oben und gelangen in Anlage an die oberen Schwingen 11. Die Sägezahnverzahnungen der Crashsperrenarme 49 und der Crashsperrenverzahnungen 53 sind so ausgerichtet, dass die Bewegung der oberen Schwingen 11 nach vorne nicht behindert wird.

Eine Bewegung nach hinten würde aufgrund der Stufen in mehreren möglichen Stellungen gesperrt werden, welche nachfolgend als Crashstellungen bezeichnet sind. Sofern das Prallelement 13 keinen Widerstand erfährt, bewegt es sich in die vorderste mögliche Crashstellung. Gelangt dagegen das Prallelement 13 vorher in Anlage an den Kopf des Insassens, so sperren die Crashsperrenarme 49 und die Crashsperrenverzahnungen 53 in der am nächsten zurück gelegenen Crashstellung. Damit wird der Kopf des Insassens so weit weit vorne wie möglich abgestützt und dadurch so gering wie möglich belastet.

Die crashaktive Kopfstütze kann nach einem Crash rückgesetzt werden, d.h. reversibel in die Ausgangsstellung gebracht werden. Hierzu ist im Träger 5 und dessen Blende eine Öffnung vorgesehen, in welche ein als Werkzeug dienender, stabförmiger Rücksetzer W in Längsrichtung einführbar ist, und zwar vorliegend näherungsweise vertikal von oben. Da durch die Bewegung des Steuerhebels 31 die Entfernung der Haftplatte 41 zum Magneten 43 zu groß für ein automatisches Anziehen ist, wird der Rücksetzer W in eine Aufnahme 59 des Steuerhebels 31 eingeführt und durch die weitere Bewegung der Steuerhebel 31 entgegen der Kraft der Auslösefeder 45 nach unten gedrückt, bis die Haftplatte 41 vom Magneten 43 angezogen wird und an diesem haften bleibt. Mit der Bewegung des Steuerhebels 31 nach unten drücken dessen Ausleger 47 die Crashsperrenarme 49 nach unten, d.h. aus der Crashsperrenverzahnung 53. Der Steuerhebel 31 befindet sich nun in seiner Ausgangsstellung. In abgewandelter Ausführung ist der Rücksetzer W am Steuerhebel 31 angelenkt, wird im Crashfall nach oben gedrückt und ist dann sichtbar und für eine Betätigung bereit.

Durch manuellen Druck von vorne auf das Prallelement 13, vorzugsweise mit beiden Händen, kann nun das Prallelement 13 und damit das Fangblech 21 entgegen der Kraft der sich spannenden Doppelschenkelfeder 25 wieder nach hinten bewegt werden, zu ihrer aufnahmebereiten Verriegelung hin. Sobald der Haltebolzen 23 in Anlage an eine vorspringende Lippe der Klinke 27 gelangt, wird die Klinke 27 durch den Haltebolzen 23 in ihre Ausgangsstellung gedreht. Das am Sperrarm 39 der Klinke 27 auf deren oberer Seite anliegende und gegenüber der Ausgangsstellung etwas nach oben gedrückte Rundelement 35 rollt dabei am Rand des Sperrarmes 39 entlang ab. Sobald das Rundelement 35 zum Scheitel des Sperrarmes 39 gelangt, schnappt sie abwärts auf die hintere Seite des Sperrarmes 39, also auf die in Schließrichtung nacheilende Seite. Die Klinke 27 ist dadurch wieder gesperrt. Mit dem Zurückdrehen der Klinke 27 gelangt auch das Fangblech 21 in Anlage an die Crashsperrenarme 49 und schwenkt diese in ihre Ausgangsstellung zurück, wodurch der Steuerhebel 31 entlastet wird.

In einer Abwandlung des Ringelementes 22, in welcher gleiche und gleichwirkende Bauteile gleiche Bezugszeichen tragen und welche dem zuvor beschriebenen Ringelement 22 gleicht, soweit nicht abweichend beschrieben, ist das Ringelement 22 zweiteilig ausgeführt und besteht aus einem Reibbuchsenteil 22e und einem Federteil 22f. Das radial weiter innen angeordnete Federteil 22f mit einer geschlossenen Ringform besteht aus einem elastischen Material, insbesondere ein Kunststoff, und umschließt die Welle 12. Axial verlaufende Rippen 22d des Federteils 22f auf dessen Innenseite wirken dabei formschlüssig mit entsprechenden Wellenrippen 12a auf der Außenseite der Welle 12 zusammen. Dabei ist - bezogen auf eine in Umfangsrichtung gleichmäßige Verteilung der Wellenrippen 12a - eine Wellenrippe 12a ausgelassen, wodurch das Federteil 22f über einen größeren Umfangsbereich zur Welle 12 abtaucht und auf der Außenseite des Federteils 22f ein Freiraum 22g entsteht.

Das Reibbuchsenteil 22e ist radial weiter außen angeordnet und umschließt das Federteil 22f. Dabei ist das Reibbuchsenteil 22e an einer Stelle seines Umfangs axial geschlitzt, so dass seine Ringform in Umfangsrichtung unterbrochen ist. In dem entstandenen Spalt ist eine Lasche 22h angeordnet, welche an einer Seite am Reibbuchsenteil 22e angeformt und leicht radial nach innen versetzt ist. Die Lasche 22h ist innerhalb des Freiraumes 22g angeordnet, wodurch ein Formschluss entsteht und die beiden Teil des Ringelementes 22 drehfest miteinander verbunden sind. An einem stirnseitigen Ende des Reibbuchsenteils 22e ist der als Distanzstück dienende Flansch 22a angeformt, während am gegenüberliegenden stirnseitigen Ende auf der Innenseite des Reibbuchsenteils 22e mehrere Axialanschläge 22i am Reibbuchsenteil 22e angeformt sind, welche der Anlage an das Federteil 22f und damit einer genauen Relativpositionierung dienen.

Das Material des Reibbuchsenteils 22e, in der Regel Kunststoff, ist so gewählt, dass eine gewisse Elastizität in Umfangsrichtung besteht und die Außenmantelfläche 22c reibschlüssig an der Innenseite der zugeordneten Lagerbuchse 21' des Fangblechs 21 anliegt. Das Reibbuchsenteil 22e ist unter Vorspannung in Umfangsrichtung montiert, wobei durch ein Auffedern ein Spielausgleich in Umfangsrichtung erfolgt, während das Federteil 22f unter Vorspannung in radialer Richtung montiert ist, was für eine gute Anlage der Außenmantelfläche 22c an der Lagerbuchse 21' sorgt. Das Ringelement 22 ist vorzugsweise eine vormontierte Baugruppe, d.h. das Federteil 22f und das Reibbuchsenteil 22e sind vor der Montage auf der Welle 12 bereits zusammengesteckt.

### Bezugszeichenliste

- 1: Kopfstütze
- 3: Kopfstützenstange
- 5: Träger
- 7: Achse
- 11: obere Schwinge
- 12: Welle
- 12a: Wellenrippe
- 13: Prallelement
- 15: untere Schwinge
- 17: Schwingenlagerbolzen
- 19: Viergelenk
- 21: Fangblech
- 21': Lagerbuchse
- 22: Ringelement
- 22a: Flansch
- 22b: Fase
- 22c: Mantelaußenfläche
- 22d: Rippe
- 22e: Reibbuchsenteil
- 22f: Federteil
- 22g: Freiraum
- 22h: Lasche
- 22i: Axialanschlag
- 23: Haltebolzen
- 25: Doppelschenkelfeder, Energiespeicher
- 27: Klinke
- 28: Klinkenlagerbolzen
- 29: Klinkenfeder
- 31: Steuerhebel
- 33: Hebellagerbolzen
- 35: Rundelement
- 37: Haltefeder
- 39: Sperrarm
- 41: Haftplatte
- 43: Magnet
- 45: Auslösefeder
- 47: Ausleger
- 49: Crashsperrenarm, Crashsperrenteil
- 53: Crashsperrenverzahnung
- 59: Aufnahme
- W: Rücksetzer

## Patentansprüche

1. Kopfstütze für einen Fahrzeugsitz, mit einem Träger (5), wenigstens je einer am Träger (5) angelenkten oberen und unteren Schwinge (11, 15), welche um horizontale Achsen (7, 17) schwenkbar sind, einem an den Schwingen (11, 15) angelenkten Prallelement (13), welches mit den Schwingen (11, 15) und dem Träger (5) wenigstens ein Viergelenk (19) bildet, und einem Energiespeicher (25), wobei im Crashfall der Energiespeicher (25) das Viergelenk (19) antreibt, so dass das Prallelement (13) aus einer Ausgangsstellung heraus nach vorne in eine durch eine Crashsperre (49, 53) nach hinten gesperrte Crashstellung ausfährt, wobei die Prallelement (13) im Normalgebrauch aus der Ausgangsstellung heraus in wenigstens eine weitere Komfortstellung überführbar ist, welche durch wenigstens ein Ringelement (22) gesichert ist, **dadurch gekennzeichnet, dass** die obere Schwinge (11) und die untere Schwinge (15) eine von der Parallelität abweichende Ausrichtung zueinander einnehmen, wobei das Ringelement (22) zwischen einer die Achse (7) der oberen Schwingen (11) umschließenden Welle (12), auf welcher das Ringelement (22) sitzt oder einstückig mit ihr ausgebildet ist, und einer Lagerbuchse (21'), an deren Innenseite das Ringelement (22) reibschlüssig anliegt, wirksam ist.

2. Kopfstütze nach Anspruch 1, **dadurch gekennzeichnet, dass** die Welle (12) als Hohlwelle ausgebildet ist und die oberen Schwingen (11) drehfest miteinander verbindet.

3. Kopfstütze nach Anspruch 1 oder 2, **dadurch gekennzeichnet, dass** die Lagerbuchse (21') an einem Fangblech (21) angeformt oder anderweitig angebracht ist und dieses schwenkbar lagert, wobei das Fangblech (21) von einer als Energiespeicher (25) dienenden Feder beaufschlagt und von einer schwenkbare Klinke (27) in der Ausgangsstellung gehalten wird.

4. Kopfstütze nach Anspruch 2 und 3, **dadurch gekennzeichnet, dass** das Ringelement (22) mit einem Flansch (22a) axial zwischen dem Fangblech (21) und der oberen Schwinge (11) angeordnet ist.

5. Kopfstütze nach einem der Ansprüche 1 bis 4, **dadurch gekennzeichnet, dass** das Ringelement (22) formschlüssig auf der Welle (12) sitzt, insbesondere indem das Ringelement (22) mit Rippen (22d) oder anderen vorspringenden oder zurückgesetzten Materialpartien mit der mit entsprechenden Rippen (12a) oder Materialpartien versehenen Welle (12) drehfest verbunden ist.

6. Kopfstütze nach einem der Ansprüche 1 bis 5, **dadurch gekennzeichnet, dass** verschiedene Komfortstellungen der Kopfstütze (1) vorgesehen sind, welche stufenlos einstellbar sind und welche das Ringelement (22) durch den Reibschluss zwischen einer Außenmantelfläche (22c) des Ringelementes (22) und der das Ringelement (22) umschließenden Lagerbuchse (21') sichert.

7. Kopfstütze nach einem der Ansprüche 1 bis 6, **dadurch gekennzeichnet, dass** das Ringelement (22) zweiteilig ausgebildet ist und aus einem Reibbuchsenteil (22e) und einem vom Reibbuchsenteil (22e) umschlossenenen Federteil (22f) besteht.

8. Kopfstütze nach Anspruch 5 und 7, **dadurch gekennzeichnet, dass** das eine geschlossene Ringform aufweisende Federteil (22f) formschlüssig auf der Welle (12) sitzt und eine radiale Vorspannung aufweist.

9. Kopfstütze nach Anspruch 7 oder 8, **dadurch gekennzeichnet, dass** das an einer Stelle seines Umfangs axial geschlitzte Reibbuchsenteil (22e) in Umfangsrichtung eine Vorspannung aufweist.

10. Kopfstütze nach Anspruch 8 und 9, **dadurch gekennzeichnet, dass** das Federteil (22f) durch Auslassung einer Rippe (12a) der Welle (12) über einen größeren Umfangsbereich zur Welle (12) abtaucht und auf der Außenseite des Federteils (22f) ein Freiraum (22g) entsteht, innerhalb dessen eine Lasche (22h) des Reibbuchsenteils (22e) angeordnet ist.

11. Kopfstützen nach einem der Ansprüche 7 bis 10, **dadurch gekennzeichnet, dass** das Ringelement (22) eine vormontierte Baugruppe ist, wobei das Reibbuchsenteil (22e) Axialanschläge (22i) zur Anlage an das Federteil (22f) aufweist.

## Claims

1. Headrest for a vehicle seat, having a carrier (5), at least one upper and one lower rocker arm (11, 15) which are each articulated to the carrier (5) and which can be pivoted about horizontal axes (7, 17), an impact element (13) which is articulated to the rocker arms (11, 15) and which forms, with the rocker arms (11, 15) and the carrier (5), at least a four-bar mechanism (19), and an energy storage device (25), the energy storage device (25) driving the four-bar mechanism (19) in the event of a crash so that the impact element (13) moves forwards from an initial position into a crash position which is blocked towards the rear by a crash blocking member (49, 53), the impact element (13) being able to be moved, during normal use, from the initial position into at least one additional comfort position which is secured by at least one ring element (22), **characterised in that** the upper rocker arm (11) and the lower rocker arm (15) assume a non-parallel alignment relative to each other, the ring element (22) being effective between a shaft (12), which extends around the axis (7) of the upper rocker arms (11) and on which the ring element (22) is seated or is constructed integrally therewith, and a bearing sleeve (21') against whose inner side the ring element (22) abuts in a frictionally-engaging manner.

2. Headrest according to claim 1, **characterised in that** the shaft (12) is constructed in the manner of a hollow shaft and connects the upper rocker arms (11) to each other in a rotationally secure manner.

3. Headrest according to claim 1 or 2, **characterised in that** the bearing sleeve (21') is formed on or is fitted in some other manner to a catch sheet (21) and pivotably supports the catch sheet, the catch sheet (21) being acted upon by a spring which acts as an energy storage device (25) and being retained in the initial position by means of a pivotable detent (27).

4. Headrest according to claims 2 and 3, **characterised in that** the ring element (22) is arranged with a flange (22a) axially between the catch sheet (21) and the upper rocker arm (11).

5. Headrest according to any one of claims 1 to 4, **characterised in that** the ring element (22) rests on the shaft (12) in a positive-locking manner, in particular with the ring element (22) having ribs (22d) or other protruding or recessed material portions being connected in a rotationally secure manner to the shaft (12) which is provided with corresponding ribs (12a) or material portions.

6. Headrest according to any one of claims 1 to 5, **characterised in that** various comfort positions of the headrest (1) are provided which can be adjusted in a stepless manner and which the ring element (22) secures by means of the frictional engagement between an outer covering face (22c) of the ring element (22) and the bearing sleeve (21') which surrounds the ring element (22).

7. Headrest according to any one of claims 1 to 6, **characterised in that** the ring element (22) is constructed in two parts and comprises a friction sleeve portion (22e) and a resilient portion (22f) which is surrounded by the friction sleeve portion (22e).

8. Headrest according to claims 5 and 7, **characterised in that** the resilient portion (22f) which has a closed annular form rests in a positive-locking manner on the shaft (12) and has radial bias.

9. Headrest according to claim 7 or 8, **characterised in that** the friction sleeve portion (22e) which is axially slotted at one location of the periphery thereof has bias in a peripheral direction.

10. Headrest according to claims 8 and 9, **characterised in that** the resilient portion (22f), by omitting a rib (12a) of the shaft (12), dips over a relatively large peripheral region towards the shaft (12) and, at the outer side of the resilient portion (22f), a free space (22g) is produced in which a flap (22h) of the friction sleeve portion (22e) is arranged.

11. Headrests according to any one of claims 7 to 10, **characterised in that** the ring element (22) is a preassembled assembly, the friction sleeve portion (22e) having axial stops (22i) for abutment against the resilient portion (22f).

## Revendications

1. - Appui-tête pour un siège de véhicule, avec un support (5), au moins une bielle supérieure et une bielle inférieure (11, 15) articulées chacune sur le support (5), lesquelles bielles sont aptes à pivoter autour d'axes horizontaux (7, 17), un élément de choc (13) articulé sur les bielles (11, 15), lequel forme avec les bielles (11, 15) et le support (5) au moins une articulation à quatre points (19) et un réservoir d'énergie (25), à l'occasion de quoi, en cas d'accident, le réservoir d'énergie (25) actionne l'articulation à quatre points (19) de telle sorte que l'élément de choc (13) se déplace vers l'avant à partir d'une position de sortie vers l'avant dans une position d'accident bloquée à l'arrière par un dispositif de blocage en cas de choc (49, 53), à l'occasion de quoi l'élément de choc (13) est apte à être transféré dans l'utilisation normale à partir de la position de sortie dans au moins une autre position de confort, laquelle est bloquée par au moins un élément annulaire (22), **caractérisé par le fait que** la bielle supérieure (11) et la bielle inférieure (15) prennent l'une par rapport à l'autre une orientation s'écartant du parallélisme, à l'occasion de quoi l'élément annulaire (22) est actif entre un arbre (12) entourant l'axe (7) de la bielle supérieure (11), sur lequel l'élément annulaire est en appui ou est réalisé d'une seule pièce avec lui, et un coussinet (21') sur le côté interne duquel s'applique par friction l'élément annulaire (22).

2. - Appui-tête selon la revendication 1, **caractérisé par le fait que** l'arbre (12) est réalisé sous la forme d'un arbre creux et relie les bielles supérieures (11) de façon solidaire en rotation.

3. - Appui-tête selon l'une des revendications 1 ou 2, **caractérisé par le fait que** le coussinet (21') est formé ou appliqué autrement sur une tôle d'arrêt (21) et celle-ci est montée de façon pivotante, à l'occasion de quoi la tôle d'arrêt (21) est attaquée par un ressort servant de réservoir d'énergie (25) et est maintenue dans la position de sortie par un cliquet pivotant (27).

4. - Appui-tête selon l'une des revendications 2 et 3, **caractérisé par le fait que** l'élément annulaire (22) est disposé avec une bride (22a) axialement entre la tôle d'arrêt (21) et la bielle supérieure (11).

5. - Appui-tête selon l'une des revendications 1 à 4, **caractérisé par le fait que** l'élément annulaire (22) est placé à engagement positif sur l'arbre (12), en particulier par **le fait que** l'élément annulaire (22) avec des nervures (22d) ou autres parties de matière en saillie ou en retrait est lié de façon solidaire en rotation avec l'arbre (12) doté de nervures (12a) ou parties de matière correspondantes.

6. - Appui-tête selon l'une des revendications 1 à 5, **caractérisé par le fait que** différentes positions de confort de l'appui-tête (1) sont prévues, lesquelles sont réglables sans à-coups et qui bloquent l'élément annulaire (22) par la friction entre une surface d'enveloppe externe (22c) de l'élément annulaire (22) et le coussinet (21') entourant l'élément annulaire (22).

7. - Appui-tête selon l'une des revendications 1 à 6, **caractérisé par le fait que** l'élément annulaire (22) est réalisé en deux parties et se compose d'une partie de douille de friction (22e) et d'un élément de ressort (22f) entouré par la partie de douille de friction (22e).

8. - Appui-tête selon les revendications 5 et 7, **caractérisé par le fait que** la partie de ressort (22f) présentant une forme annulaire fermée est placée à engagement positif sur l'arbre (12) et présente une prétension radiale.

9. - Appui-tête selon l'une des revendications 7 ou 8, **caractérisé par le fait que** la partie de douille de friction (22e) fendue axialement sur une position de sa périphérie présente une prétension en direction périphérique.

10. - Appui-tête selon les revendications 8 et 9, **caractérisé par le fait que** la partie de ressort (22f) plonge par omission d'une nervure (12a) de l'arbre (12) sur une zone périphérique plus grosse sur l'arbre (12) et un espace libre (22g) se forme sur la partie externe de la partie de ressort (22f), espace libre à l'intérieur duquel une languette (22h) de la partie de douille de friction (22e) est disposée.

11. - Appui-tête selon l'une des revendications 7 à 10, **caractérisés par le fait que** l'élément annulaire (22) est une unité prémontée, à l'occasion de quoi la partie de douille de friction (22e) présente des butées axiales (22i) pour l'application sur la partie de ressort (22f).
